# EUROPÄISCHE PATENTANMELDUNG

(11) **EP 1 367 375 A1**
(43) Veröffentlichungstag der Anmeldung: **03.12.2003**
(21) Anmeldenummer: 03012018.2
(22) Anmeldetag: 28.05.2003
(51) Int. Cl.: G01M 1/22, G01M 1/02

(54) **Vorrichtung zum Auswuchten eines Fahrzeugrades**

(30) Priorität: 28.05.2002 DE 10223841
(71) Anmelder: att Automotive Testing Technologies GmbH, 77694 Kehl-Auenheim (DE)
(72) Erfinder: Becker, Manfred, 78573 Wurmlingen (DE); Gnielka, Peter Dr., 64287 Darmstadt (DE)
(74) Vertreter: Kaiser, Magnus

(57) **Zusammenfassung**

Es wird eine Vorrichtung zum Auswuchten eines Fahrzeugrades vorgeschlagen, die im wesentlichen umfasst: Eine Spindel 2 zum Aufstecken eines auszuwuchtenden Rades 4, einen Motor 11 zum Antrieb der Spindel 2, um ein Rotieren des Rades 4 zu bewirken, eine der Spindel 2 zugeordnete Messeinrichtung 6 zum Messen etwa vorhandener Unwuchtkräfte während des Rotierens des Rades 4, eine Auswerteeinrichtung 7 zum Berechnen der Unwucht und/oder der am Rad 4 anzubringenden Ausgleichsgewichte, sowie eine Steuereinheit 10 zum Steuern des Motors 11. Die Steuereinheit 10 ist erfindungsgemäß mit der Messeinrichtung 6 und/oder der Auswerteeinrichtung 7 verbunden, und sie senkt die Drehzahl der Spindel 2 selbsttätig ab, falls die von der Messeinrichtung 6 erfassten Unwuchtkräfte einen vorbestimmten Grenzwert überschreiten. Hierdurch wird vorteilhafterweise der Dynamikbereich der Vorrichtung erhöht, ohne an den Dynamikbereich der verwendeten Messsensoren erhöhte Anforderungen stellen zu müssen.

## Beschreibung

Die Erfindung betrifft eine Vorrichtung zum Auswuchten eines Fahrzeugrades nach dem Oberbegriff des Anspruchs 1. Die Vorrichtung umfasst demnach eine Spindel zum Aufstecken eines auszuwuchtenden Rades, einen Motor zum Antrieb der Spindel, um ein Rotieren des Rades zu bewirken, eine der Spindel zugeordnete Messeinrichtung zum Messen einer etwa vorhandenen Unwucht während des Rotierens des Rades, eine Auswerteeinrichtung zum Berechnen der Unwucht und/oder der am Rad anzubringenden Ausgleichsgewichte, sowie eine Steuereinheit zum Steuern des Motors.

Auswuchtmaschinen dieser Art werden in Werkstätten und Reifenhandlungen weit verbreitet eingesetzt. Zum Auswuchten eines Fahrzeugrades wird dieses auf die Spindel gesteckt, dort befestigt und durch den Motor in Rotation versetzt. Soweit eine dynamische Unwucht vorhanden ist, ergeben sich an der Spindellagerung Lagerkräfte, die von den durch die Unwucht erzeugten Fliehkräften abhängen. Diese Lagerkräfte werden von Kräftesensoren erfasst und das generierte Signal der Auswerteeinrichtung zugeführt. Diese Auswerteeinrichtung berechnet aus den gemessenen Werten die Unwucht und die Orte sowie Massen der zum Ausgleich dieser Unwucht anzubringenden Ausgleichsgewichte. Dem Bediener wird dann üblicherweise auf einem Display angezeigt, an welcher Stelle des Rades ein Ausgleichsgewicht anzubringen ist und welche Masse dieses Ausgleichsgewicht haben muss.

Die Spindel ist üblicherweise in einer Spindelhülse gelagert, welcher ihrerseits an zwei voneinander beabstandeten Stellen in entsprechenden Aufnahmen sitzt. Zwischen diesen Aufnahmen der Spindelhülse sind Kräftemesskapseln als Sensoren angeordnet.

Die Beträge der auf diese Sensoren wirkenden Lagerkräfte sollten in einem relativ eng begrenzten Bereich liegen, damit einfache, robuste und kostengünstige Sensoren eingesetzt werden können. Allerdings ist dies, wie oben bereits erwähnt, durchaus nicht der Fall, da in der Alltagsanwendung einer Auswuchtvorrichtung sehr unterschiedliche Räder mit unterschiedlichen Radmassen und dementsprechend variierenden Unwuchten ausgewuchtet werden müssen. Die bislang verwendeten Sensoren zum Messen der Lagerkräfte mussten daher einen weiten Kräftebereich zuverlässig messen können, ohne gleichzeitig bei besonders großen Unwuchten Schaden zu nehmen.

Der vorliegenden Erfindung liegt daher die Aufgabe zugrunde, eine Vorrichtung der eingangs genannten Art hinsichtlich ihres Einsatzbereiches für variierende Unwuchtkräfte zu verbessern, ohne die Messeinrichtung aufwendiger oder kostenintensiver konstruieren zu müssen.

Gelöst ist diese Aufgabe durch eine Vorrichtung mit den Merkmalen des Patentanspruchs 1.

Vorteilhafte Weiterbildungen der Erfindung sind in den Patentansprüchen 2 bis 4 niedergelegt.

Eine Vorrichtung zum Auswuchten eines Fahrzeugrades nach der Erfindung verfügt also über eine Steuereinheit, die mit der Messeinrichtung und/oder der Auswerteeinrichtung derart zusammenwirkt, dass die Drehzahl der Spindel durch entsprechendes Ansteuern des Motors abgesenkt oder begrenzt wird, sobald die von der Messeinrichtung erfassten Unwuchtkräfte einen vorbestimmten Grenzwert überschreiten. Im Gegensatz zu bisherigen Auswuchtvorrichtungen, die mit einer konstanten Drehzahl laufen, erkennt die erfindungsgemäße Vorrichtung selbstständig, ob die auf die Messeinrichtung bzw. deren Sensoren wirkenden Unwuchtkräfte zu groß sind, um noch im Messbereich zu liegen. In diesem Fall regelt die Vorrichtung die Spindeldrehzahl auf einen niedrigeren Wert ab, bei dem das Messsignal dann ausgewertet werden kann.

Alternativ hierzu kann es auch ausreichen, bei anlaufender Spindel bereits die auftretenden Unwuchtsignale aufzunehmen und die Spindeldrehzahl zu begrenzen, sobald ein vorbestimmter Grenzwert für die Unwuchtkräfte erreicht ist.

Da die von einer Unwucht u eines Rades erzeugte Fliehkraft F abhängig vom Quadrat der Drehzahl Ω ist (F = u*Ω²), ist das Begrenzen bzw. Einregeln der Drehzahl bei zu hohen Unwuchtkräften diejenige Maßnahme, die den Dynamikumfang der Messeinrichtung am effizientesten erhöht. Dadurch können kostengünstige und robuste Kräftemesssensoren verwendet werden, die nur einen kleinen Bereich von wirkenden Kräften messen können. Außerdem wird die Messgenauigkeit erhöht und die Vorrichtung, insbesondere die Sensoren, vor Überlastung geschützt.

Die erfindungsgemäße Vorrichtung kann derart weiter ausgestaltet sein, dass die von der Messeinrichtung erfassten Unwuchtkräfte durch Regeln der Spindeldrehzahl in einen vorbestimmten Bereich eingeregelt werden. Es wird dann also nicht nur ein oberer Grenzwert für die Unwuchtkräfte, sondern auch ein unterer Grenzwert angegeben, um so über die Regelung der Drehzahl eine erhebliche Erhöhung der Auflösung der Messeinrichtung zu erreichen. Dies wird allerdings nur dann sinnvoll sein, wenn gleichzeitig eine obere Grenze für die Spindeldrehzahl existiert; denn es ist ja gerade der Sinn einer Auswuchtvorrichtung, vorhandene Unwuchten auszugleichen, so dass die Unwuchtkräfte auf einen Wert möglichst nahe bei null absinken. Hier müsste dann ein Kompromiss gefunden werden zwischen einer größten zu tolerierenden Unwucht und einer noch sinnvollen Spindeldrehzahl.

Für den Alltagsbetrieb in einer KFZ-Werkstatt hat es sich als günstig herausgestellt, die Spindel zunächst auf eine Standarddrehzahl, vorzugsweise 150 min⁻¹, zu beschleunigen, bei dieser Standarddrehzahl die Unwuchtkräfte zu messen und nur dann, wenn diese Kräfte zu groß sein sollten, die Drehzahl gemäß der Erfindung abzusenken, um die auftretenden Unwuchtkräfte innerhalb des Messbereichs der Sensoren einzuregeln. Denn der Auswuchtvorgang muss schnell und unkompliziert ablaufen, und er wird in der Regel nicht wiederholt, nachdem Ausgleichsgewichte an den Rädern angebracht wurden.

Ein Ausführungsbeispiel der Erfindung wird im folgenden an Hand der beigefügten Zeichnungen näher beschrieben und erläutert. Es zeigen:
- Figur 1: eine Schemazeichnung einer erfindungsgemäßen Vorrichtung;
- Figur 2: eine Schemazeichnung der funktionswichtigen Teile und ihrer Geometrie;
- Figur 3: ein Ablaufdiagramm der Drehzahl in Abhängigkeit der gemessenen Unwuchtkräfte.

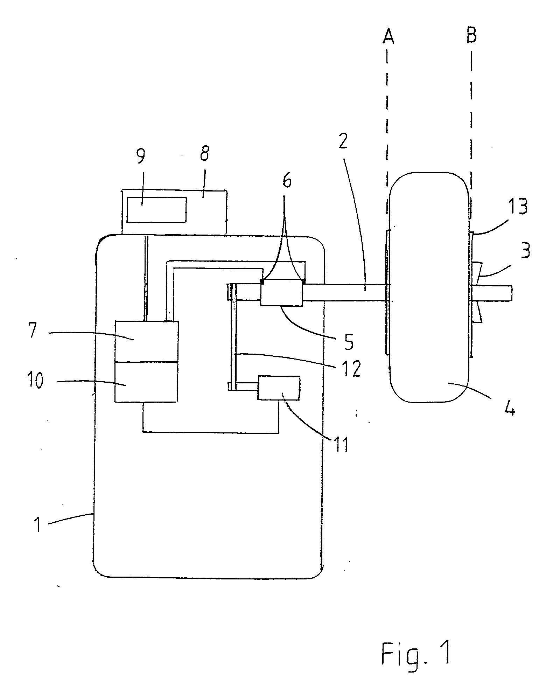

In Figur 1 ist eine erfindungsgemäße Vorrichtung mit einem Gehäuse 1 und einer aus dem Gehäuse ragenden Spindel 2 mit einer Spannvorrichtung 3 für ein auszuwuchtendes Rad 4 gezeigt. Die Spindel 2 ist in einer Spindelhülse 5 gelagert, an der zwei Sensoren 6 die durch eine Unwucht des Rades 4 erzeugten Lagerkräfte messen. Die Sensoren 6 geben die gemessenen Signale an eine Auswerteeinrichtung 7 weiter, wo die Unwucht und die sich daraus ergebenden optimalen Ausgleichsgewichtsmassen und -orte berechnet werden. Die Auswerteeinrichtung 7 ist einem Bedienfeld 8 mit einem Display 9 zugeordnet. Außerdem steht sie in Wirkverbindung mit einer Steuereinheit 10 für einen Motor 11, welcher über einen Riemen 12 die Spindel 2 antreibt.

Die Funktionsweise dieser Vorrichtung ist die folgende: Nach Aufsetzen des Rades 4 auf die Spindel 2 und Festlegen desselben mittels der Spannvorrichtung 3 versetzt der Motor 11 die Spindel 2 in Rotation. Sobald das Rad 4 eine vorgegebene Standarddrehzahl erreicht hat, berechnet die Auswerteeinrichtung 7 aus den von den Sensoren 6 gemessenen Lagerkräften die Unwucht des Rades 4. Aufgrund der gegebenen Randbedingungen, der Lage von zwei Auswuchtebenen A und B an der Innenseite und der Außenseite des Rades 4 sowie des radialen Abstands des Felgenrandes 13 von der Spindelachse, rechnet die Auswerteeinrichtung 7 die Masse und die Winkelstellung zweier am Felgenrand 13 in den Auswuchtebenen A und B anzubringenden Ausgleichsgewichte aus und zeigt dies im Display 9 an.

Nach Abschluss dieses Mess- und Auswertevorgangs wird das Rad 4 in eine Winkelstellung gedreht, in der das erste Ausgleichsgewicht in der Auswuchtebene A am Felgenrand 13 angebracht werden muss. Nachdem das entsprechende Ausgleichsgewicht angebracht ist, wird das Rad 4 in diejenige Winkelstellung gedreht, in der ein zweites Ausgleichsgewicht in der Auswuchtebene B am Felgenrand 13 angebracht werden soll. Danach kann das Rad 4 nach Lösen der Spannvorrichtung 3 von der Spindel 2 abgenommen werden.

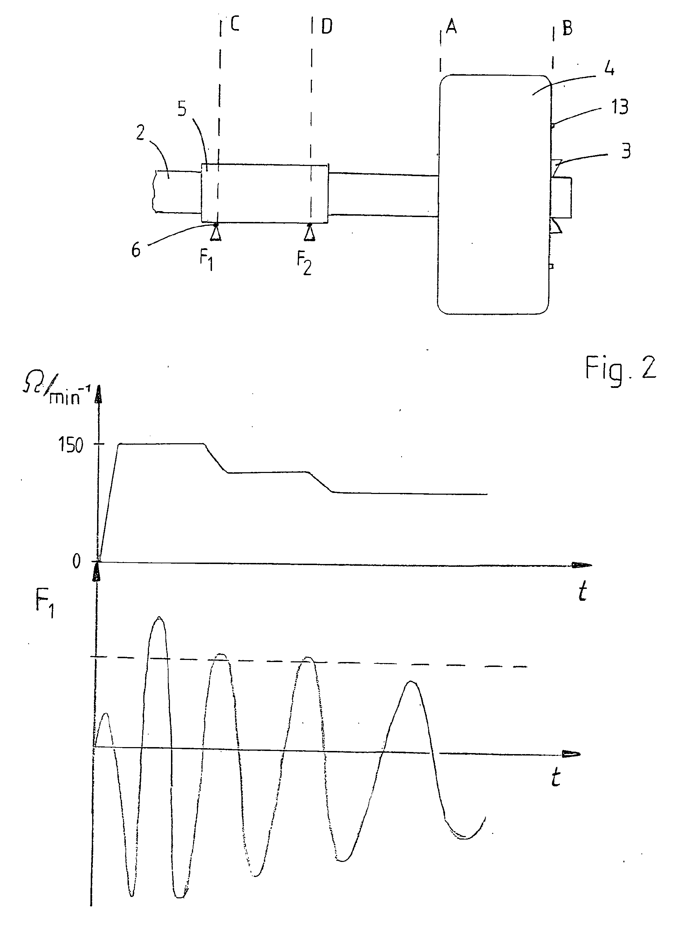

Figur 2 verdeutlicht schematisch nochmals das Messprinzip für die Unwucht. Das auf der Spindel 2 mittels der Spannvorrichtung 3 festgelegte Rad 4 erzeugt beim Rotieren eine Fliehkraft F, die vom Quadrat der Drehzahl Ω und der Unwucht u in der folgenden Relation abhängt: F = u*Ω². Diese Fliehkraft F äußert sich an der Spindelhülse 5 durch periodisch mit der Umdrehung des Rades 4 auftretende Lagerkräfte F₁ und F₂ in den (willkürlich festgelegten) Ebenen C und D. Diese Lagerkräfte F₁ und F₂ werden von in den Ebenen C und D an der Spindelhülse 5 angebrachten Kraftsensoren 6 gemessen. Aufgrund der bekannten Abstände zwischen den Ebenen A, B, C und D und der bekannten Drehzahl Ω kann die Unwucht u berechnet werden. Nachdem die Ausgleichsgewichte zum Ausgleich dieser Unwucht u üblicherweise am Felgenrand 13 angebracht werden, und zwar in den Auswuchtebenen A und B, ist die axiale und die radiale Lage der mindestens zwei notwendigen Ausgleichsgewichte bekannt, so dass nur noch die Winkelstellung am Rad 4 sowie die Masse des Ausgleichsgewichts berechnet werden muss. Werden diese Ausgleichsgewichte mit der errechneten Masse am errechneten (Winkel-)ort am Felgenrand 13 angebracht, ist das Rad 4 innerhalb zulässiger Toleranzen ausgewuchtet. An Hand dieser Darstellung und des Zusammenhangs zwischen der Fliehkraft F und der Drehzahl Ω wird deutlich, dass es, wie erfindungsgemäß erkannt worden ist, zur Erhöhung des Dynamikumfangs der Vorrichtung effizienter ist, die Drehzahl Ω zu begrenzen bzw. zu regeln, als zum Messen der Lagerkräfte F₁ und F₂ Sensoren 6 zu verwenden, die einen möglichst großen Dynamikbereich abdecken.

Figur 3 schließlich zeigt rein schematisch ein Ablaufdiagramm, und zwar in der oberen Hälfte die Drehzahl Ω der Spindel und in der unteren Hälfte die (Teil)lagerkraft F₁, aufgetragen über der Zeit t. Nach einem Startvorgang, bei dem die Drehzahl auf 150 min⁻¹ eingeregelt wird, zeigt der Messsensor der Lagerkraft F₁ ein periodisches Signal, dessen Amplitude über einem Grenzwert F_{1Grenz} liegt. Deswegen wird die Drehzahl Ω gemäß der vorliegenden Erfindung in zwei Stufen gesenkt, bis die Amplitude der Lagerkraft F1 unter dem Grenzwert F_{1Grenz} liegt. Erst dann wird die Messung gestartet.

## Patentansprüche

1. Vorrichtung zum Auswuchten eines Fahrzeugrades, mit einer Spindel (2) zum Aufstecken eines auszuwuchtenden Rades (4), mit einem Motor (11) zum Antrieb der Spindel (2), um ein Rotieren des Rades (4) zu bewirken, mit einer der Spindel (2) zugeordneten Messeinrichtung (6) zum Messen etwa vorhandener Unwuchtkräfte während des Rotierens des Rades (4), mit einer Auswerteeinrichtung (7) zum Berechnen der Unwucht und/oder der am Rad (4) anzubringenden Ausgleichsgewichte, sowie mit einer Steuereinheit (10) zum Steuern des Motors (11),
**dadurch gekennzeichnet,**
**dass** die Steuereinheit (10) derart mit der Messeinrichtung (6) und/oder der Auswerteeinrichtung (7) zusammenwirkend ausgestaltet ist, dass sie die Drehzahl der Spindel (2) absenkt oder begrenzt, wenn die von der Messeinrichtung (6) erfassten Unwuchtkräfte einen vorbestimmten Grenzwert überschreiten.

2. Vorrichtung nach Anspruch 1,
**dadurch gekennzeichnet,**
**dass** die Steuereinheit (10) derart mit der Messeinrichtung (6) und/oder der Auswerteeinrichtung (7) zusammenwirkend ausgestaltet ist, dass sie durch Regeln der Drehzahl der Spindel (2) die von der Messeinrichtung (6) erfassten Unwuchtkräfte in einen vorbestimmten Bereich einregelt.

3. Vorrichtung nach einem der Ansprüche 1 oder 2,
**dadurch gekennzeichnet,**
**dass** die Steuereinheit (10) derart mit der Messeinrichtung (6) und/oder der Auswerteeinrichtung (7) zusammenwirkend ausgestaltet ist, dass sie die Drehzahl der Spindel (2) zunächst auf eine Standarddrehzahl regelt und dann, falls die von der Messeinrichtung (6) erfassten Unwuchtkräfte über dem vorbestimmten Grenzwert liegen, die Drehzahl der Spindel (2) so weit absenkt, bis die Unwuchtkräfte unter dem vorbestimmten Grenzwert liegen.

4. Vorrichtung nach Anspruch 3,
**dadurch gekennzeichnet,**
**dass** die Standarddrehzahl etwa 150 min⁻¹ beträgt.
